(19) Europäisches Patentamt
European Patent Office
Office européen des brevets

(11) **EP 1 944 980 A2**

(12) **EUROPEAN PATENT APPLICATION**

(43) Date of publication:
**16.07.2008 Bulletin 2008/29**

(51) Int Cl.:
***H04N 7/50*** *(2006.01)*

(21) Application number: **07300712.2**

(22) Date of filing: **10.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Koninklijke Philips Electronics N.V.
5621 BA Eindhoven (NL)**

(72) Inventor: **The designation of the inventor has not yet been filed**

(74) Representative: **Landousy, Christian
Société Civile SPID,
156, Boulevard Haussmann
75008 Paris (FR)**

(54) **BIT RATE CONTROL ALGORITHM**

(57)    The present invention relates to a method for controlling the output bit rate of a transcoder adapted for transcoding a data stream which comprises a series of groups of pictures, each picture being defined by a given number of output data bits. The method comprises the step of: setting a target number R of output data bits for the current group of pictures when transcoding a first picture of the current group of pictures by using a first algorithm and updating the target number R of output data bits for the current group of pictures in response to a change of a target output bit rate of the transcoder during transcoding of any picture belonging to the current group of pictures by using a second algorithm. The second algorithm is different from the first algorithm.

FIG. 1

**Description**

TECHNICAL FIELD

The present invention relates to a method for controlling bit rate in transcoding. More specifically, the invention proposes an improved bit rate control algorithm so that when the target bit rate has been changed, the reaction time to change the transcoder output bit rate is reduced to one frame period.

BACKGROUND OF THE INVENTION

Streaming of video over wireless networks is susceptible to errors due to the fast fluctuating bandwidth. This leads to artefacts in the image and unacceptable video quality.

Although video looks like continuous motion to the viewer, it is actually a series of sequentially displayed still pictures changing with a sufficiently high frequency, providing the viewer with the perception of continuous motion. The frame rate of a video is defined as the number of displayed pictures per second. To achieve the illusion of continuous motion, the minimum frame rate is approximately ten frames per second. In the following description, the terms frame and picture are used interchangeably, but it is to be understood that they mean the same thing.

Problems occur when analogue video has to be digitally stored and/or transmitted, since the amount of digital information needed to represent an analogue video is enormous. Therefore, several standardisation committees designed compression techniques to reduce the amount of digital information needed to represent the original video. The Motion Pictures Expert Group (MPEG), is a committee that developed both the MPEG-1 standard, and its successor known as the MPEG-2 standard. The MPEG-1 is a standard providing compression algorithms for both audio and video to reduce the size of a movie. The standard aims at storing a regular movie with duration of two hours on a compact disc, such that the provided picture quality is approximately the same as that which can be achieved by popular analogue video standards such as PAL, NTSC and SÉCAM. Although MPEG-1 can theoretically provide a significantly better picture quality, the use of the standard was quite limited.

The development of MPEG-2 however was aimed at a broader range of applications. These applications aimed not only at storing digital video, but also at transmitting digital video over networks. This resulted in solutions for compressing video for a wide range of applications with various different requirements. Most of the compression techniques proposed in the MPEG-1 standard are also relied upon in the MPEG-2 standard. This is shown by the fact that typical MPEG-2 decoders are also capable of decoding MPEG-1 video streams.

By employing transcoding it is possible to change the bit rate of the compressed video dynamically to adapt to the changing bandwidth, therefore reducing the number of transmission errors. The bit-rate control algorithm used in the transcoding needs to be able to change the bit-rate as fast as possible because of the speed of bandwidth changes in wireless networks. Examples of different transcoder architectures are cascaded pixel-domain, open-loop and closed-loop transcoders. The cascaded pixel-domain transcoders offer a very high picture quality but high computational complexity, whereas open-loop transcoders offer low picture quality but low computational complexity. The closed-loop transcoder offers a high picture quality, and medium computational complexity. Thus the closed-loop transcoder can be considered as a compromise between the cascaded pixel-domain and the open-loop transcoders.

TM-5 is a well-known and commonly used bit rate control algorithm due to its low complexity, however it requires a delay of up to a group of pictures (GOP) period before it can switch to a new bit-rate, which is too slow for wireless video streaming. The input video sequence consists of GOPs. Each picture further consists of arbitrary number of slices which further consist of arbitrary number of macroblocks. Slices offer a mechanism for synchronisation and thus limit the propagation error. A macroblock contains blocks depending on the chroma format that is used. For example, when the 4:2:0 chroma format is used, a macroblock consists of 4 luminance blocks and 2 chrominance blocks. Inter frame coding techniques are operations executed on a macroblock scale. A block is formed of 8x8 neighbouring pixels. Intra frame coding techniques are applied on these blocks.

During the development of the MPEG-2 standard a Test Model was written, which served for creating bit streams during the collaborative co-experimental phase of MPEG-2 video. The many documented experiments were an attempt to verify the usefulness of various proposed coding techniques. When the proposal met the criteria, e.g. coding gain, implementation complexity and robustness, it survived. The fifth version of the test model was the last major update of the Test Model and contains a proposal of dealing with the problem of bit rate control. This bit rate control algorithm became widely known as TM-5 and is often used in relatively simple MPEG-2 encoders.

A scientific publication entitled "Rate control algorithm for fast bit-rate conversion transcoding" by Kwang-deok Seo et al., IEEE Transactions on Consumer Electronics, Vol. 46, No. 4, November 2000, discloses one possible solution for a rate control algorithm that satisfies fast rate control requirement in transcoding. According to this solution an assumption is made, namely that all blocks of a frame have been quantized by using the same quantizer parameter. However, this assumption is unrealistic in case of real video sequences. Therefore, there is still a need for an improved bit rate control algorithm.

## SUMMARY OF THE INVENTION

According to a first aspect of the invention there is thus proposed a method for controlling the output bit rate of a transcoder adapted for transcoding a data stream which comprises a series of groups of pictures, each picture being defined by a given number of output data bits, wherein the method comprises the step of: setting a target number R of output data bits for the current group of pictures when transcoding a first picture of said current group of pictures by using a first algorithm and updating the target number R of output data bits for the current group of pictures in response to a change of a target output bit rate of the transcoder during transcoding of any picture belonging to said current group of pictures by using a second algorithm, said second algorithm being different from said first algorithm.

Thus, starting from a pre-calculated target number of bits for a certain GOP, this number can be changed anywhere in the same GOP when a new target bit rate is set.

According to a second aspect of the invention there is provided another method for controlling the bit rate of a transcoder adapted for transcoding a data stream which comprises a series of groups of pictures, each picture being defined by a given number of data bits, wherein the method comprises the step of: obtaining a target number T of output data bits for a picture input to the transcoder by multiplying the size S in bits of the picture by a transcoder target output bit rate divided by the transcoder input bit rate.

One advantage of the above aspects of the present invention is that the reaction time is reduced to one picture period. This means that when a change in the target bit rate occurs, the new bit rate can be applied in respect of the picture next to be transcoded. Furthermore, in accordance with the aspects mentioned above, the described methods allow preserving the simplicity of TM-5 and can therefore be implemented with low cost. Moreover, the target bit rate can be changed at arbitrary times and a good picture quality can be achieved when streaming the video over networks exhibiting heavy bandwidth fluctuations. The methods in accordance with the first and second aspects can be implemented in different kinds of transcoder architectures and the methods do not assume fixed GOP sizes. The GOP can be shorter than expected due to scene changes.

According to a third aspect of the invention there is further provided a computer program product comprising instructions for implementing the method according to either one of the first and second aspects of the invention, when loaded and run on computer means of a transcoder.

According to a fourth aspect of the invention there is provided a control unit for controlling the output bit rate of a transcoder adapted for transcoding a data stream comprising a series of groups of pictures, each picture being defined by a given number of output data bits, the control unit comprises means for setting a target number R of output data bits for the current group of pictures when transcoding a first picture of said current group of pictures by using a first algorithm and means for updating the target number R of output data bits for the current group of pictures in response to a change of a target output bit rate of the transcoder during transcoding of any picture belonging to said current group of pictures by using a second algorithm, said second algorithm being different from said first algorithm.

According to a fifth aspect of the invention there is provided a transcoder comprising the control unit in accordance with the fourth aspect of the invention.

## BRIEF DESCRIPTION OF THE DRAWINGS

Other features and advantages of the invention will become apparent from the following description of non-limiting exemplary embodiments, with reference to the appended drawings, in which:

- Figure 1 shows a transcoder in which the embodiments of the invention may be applied;
- Figure 2 is a diagram depicting an example of rate control for an I-picture;
- Figure 3 is a diagram showing average complexity values at four different bit rates;
- Figure 4 is a diagram showing the achieved reduction ratio per picture by using a first embodiment of the invention;
- Figure 5 is a diagram showing the achieved reduction ratio per picture by using a second embodiment of the invention; and
- Figure 6 is a diagram showing an objective quality measurement of a video transcoded by using an open-loop transcoder and by applying the methods of the first and second embodiments of the invention.

## DETAILED DESRIPTION OF EMBODIMENTS OF THE INVENTION

In the following description some non-limiting embodiments of the invention will be described in more detail with reference to the appended figures. The invention is described in the context of TM-5. However, it is to be noted that the invention is not restricted to this environment, but the teachings of the invention are equally applicable to other similar types of rate control algorithms.

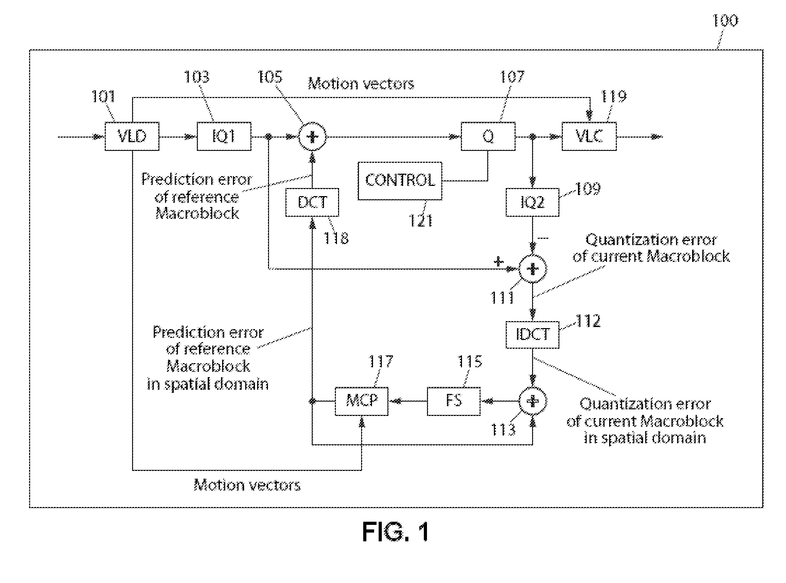

Figure 1 shows an example of a closed-loop transcoder 100, where the teachings of the invention can be applied. In Figure 1 there is shown a variable length decoder (VLD) 101 that decodes the input video sequence. Then after decoding the bit sequence it is inverse quantized by a first inverse quantizer (IQ1) 103. From the IQ1 103 the signal is fed to a first adder 105 so that a signal from a discrete cosine transformation (DCT) block 118 is summed to it. Then the summed signal is quantized by a quantizer (Q) 107. The quantized signal is then again inverse quantized by a second inverse quantizer (IQ2) 109. Then a second adder 111 sums up the signals from the IQ1 103 and from the IQ2 109 before the summed signal is fed to an inverse cosine transformation block (IDCT) 112 for conversion into spatial domain.

Next a third adder 113 sums the signals from the IDCT block 112 and from a motion compensation (MCP) block 117 and feeds thereby obtained summed signal to a frame store 115. In this architecture, the requantization errors of blocks belonging to frames that are used as a reference frame are stored in the FS 115. Thus, before a prediction error block from an inter frame is transcoded, the requantization error of the block used as a reference by the inter coded block is added to the prediction error block. This compensates for the requantization error of the reference macroblock, and therefore the difference between the reference block used in the encoder and the transcoder is minimised.

A compensated prediction error block from the MCP block 117 is then converted into frequency domain by the DCT block 118 and the signal is then requantized by the quantizer (Q) 107 using a coarser quantization parameter, variable length coded by a variable length coder (VLC) 119 and put in the stream to obtain a transcoded output. When this compensated block in its turn is used as a reference block, it enters the motion compensation loops. First it is inverse quantized by the IQ2 as explained above to be able to calculate the requantization error. Then this requantization error is stored in the FS 115 in spatial domain such that it can be used as a reference for future inter coded blocks. The motion compensated prediction (MCP) process recovers the requantization error of the correct block needed as a reference by applying the incoming motion vector on one of the stored frames. In the example of Figure 1, the MCP block 117 operates in spatial domain, but it could be also arranged to operate in frequency domain.

In Figure 1, there is also shown a rate control block 121 which is arranged to implement the bit rate control of the transcoder 100. The rate control block 121 is connected to the quantizer Q 107 so that it controls its operation. The present invention deals with the bit rate control algorithm that can adapt the operation of the transcoder.

In the architecture described above, the FS 115 and the MCP block 117 operate in spatial domain, but they could equally be arranged to operate in frequency domain. The MCP block 117 takes spatial domain blocks of a reference frame and motion vectors as inputs, and delivers spatial domain blocks without any reference to past and future frames.

The described rate control algorithm in accordance with the present invention can operate in the rate control block 121 of the transcoder 100. However, the invented rate control algorithm is by no means limited to the type of transcoder described with relation to Figure 1. The teachings of the invention could equally be applied for instance to cascaded and open-loop transcoders. First the TM-5 bit rate control algorithm is explained in more detail and then it is explained how this bit rate control algorithm was improved to achieve the above mentioned advantages.

In transcoding, coding parameters can be obtained from the incoming video stream that can be used in the bit rate control process. In the embodiments of the present invention, the transcoded video stream is generated by requantizing the DCT coefficients such that the target bit rate is satisfied. Other methods of achieving bit rate reduction on an incoming video stream are dropping of frames, reducing the spatial resolution or discarding high-frequency DCT coefficients. A bit rate control process is needed to generate the transcoded output such that the target bit rate is met.

The TM-5 algorithm is described in detail as follows:

Step 0: Initialisation

The bit rate control algorithm starts with initialising variables with proper values:

$$X_i = \frac{160 \cdot target\_bit\_rate}{115} \tag{1}$$

$$X_p = \frac{60 \cdot target\_bit\_rate}{115} \tag{2}$$

$$X_b = \frac{42 \cdot target\_bit\_rate}{115} \tag{3}$$

$$r = 2 \cdot \frac{target\_bit\_rate}{frame\_rate} \tag{4}$$

$$d_0^i = 10 \frac{r}{31} \tag{5}$$

$$d_0^p = K_p \cdot d_0^i \tag{6}$$

$$d_0^b = K_b \cdot d_0^i \tag{7}$$

$$K_p = 1.0 \tag{8}$$

$$K_b = 1.4 , \tag{9}$$

where $X_i$, $X_p$ and $X_b$ are parameters providing a relative complexity measure of a picture compared to other pictures in a GOP, r is a reaction parameter, $d_0^i$, $d_0^p$ and $d_0^b$ are the initial fullness values of virtual buffers $d_j^i$, $d_j^p$ and $d_j^b$, $K_p$ and $K_b$ are constants when the default quantization matrices are used. The relative complexity measures $X_i$, $X_p$ and $X_b$ are defined as the product of the generated number of bits and the average requantization parameters used to transcode a picture of the corresponding picture type.

In this description the indexes i, p and b refer to the I-, P- and B-pictures, respectively. Pictures coded using intra frame coding only are called I-pictures. Intra frame coding exploits the spatial redundancy that exists between adjacent pixels of a picture, i.e. it is likely that neighbouring pixels look similar. Pictures coded using forward prediction inter frame coding are called Predicted Pictures or P-pictures for short. For a P-picture, both I-pictures and P-pictures can serve as a reference picture. Pictures coded with bi-directional prediction, called B-pictures, differ from a forward predicted picture in the sense that they must use two reference pictures for making the prediction.

Step 1: Bit allocation for next GOP

At the start of a new GOP, a target number of output data bits for the next GOP is computed:

$$R = \frac{target\_output\_bit\_rate \cdot N}{frame\_rate} ,$$

$$(10)$$

where N is the number of pictures in the next GOP and R is the target number of output data bits for the GOP to be transcoded.

Step 2: Bit allocation for each picture in the GOP

This step computes the target number of bits for each picture by the following formulas according to the corresponding picture type:

$$T_i = \max \left( \frac{R}{1 + \dfrac{N_p \cdot X_p}{X_i \cdot K_p} + \dfrac{N_b \cdot X_b}{X_i \cdot K_b}}, \frac{target\_bit\_rate}{8 \cdot frame\_rate} \right) \qquad (11)$$

$$T_p = \max \left( \frac{R}{N_p + \dfrac{N_b \cdot K_p \cdot X_b}{K_b \cdot X_p}}, \frac{target\_bit\_rate}{8 \cdot frame\_rate} \right) \qquad (12)$$

$$T_b = \max \left( \frac{R}{N_b + \dfrac{N_p \cdot K_b \cdot X_p}{K_p \cdot X_b}}, \frac{target\_bit\_rate}{8 \cdot frame\_rate} \right), \qquad (13)$$

where $N_p$ and $N_b$ are the number of P- and B-pictures remaining in the current GOP, respectively. As can be seen, the global complexity measures $X_i$, $X_p$ and $X_b$ are used to compute the target number of bits for a picture. This ensures that relatively more bits are allocated to relatively more complex pictures.

Step 3: Rate control

This step computes a reference requantization parameter $Q_j$ for each macroblock j of a picture with the aim of meeting the target number of bits of a picture as close as possible. Before transcoding each macroblock j, the fullness of appropriate virtual buffers, one for each picture type, is computed:

$$d_j^i = d_0^i + B_{j-1} - \left( \frac{T_i \cdot (j-1)}{macroblock\_cnt} \right) \qquad (14)$$

$$d_j^p = d_0^p + B_{j-1} - \left( \frac{T_p \cdot (j-1)}{macroblock\_cnt} \right) \qquad (15)$$

$$d_j^b = d_0^b + B_{j-1} - \left( \frac{T_b \cdot (j-1)}{macroblock\_cnt} \right), \qquad (16)$$

where $B_j$ is the number of bits used to generate all preceding macroblocks up to and including macroblock j and *macroblock_cnt* is the total number of macroblocks in the picture. The fullness of the appropriate virtual buffer is now used to compute a reference requantization parameter:

$$Q_j = \left( \frac{d_j \cdot 31}{r} \right),$$

(17)

where r is given by formula 4.

As shown by these formulas, the fullness of virtual buffers $d_j^i$ $d_j^p$ and $d_j^b$ has a large impact on the value of the reference requantization parameter $Q_j$. In turn, $Q_j$ indirectly influences the fullness of the same virtual buffers by means of the sizes of the generated macroblocks. Therefore, this mechanism can be seen as an incremental feedback loop. By incremental it is here meant that the result of a change of requantization parameter $Q_j$ is notified when determining the fullness of the virtual buffers when transcoding the next macroblock.

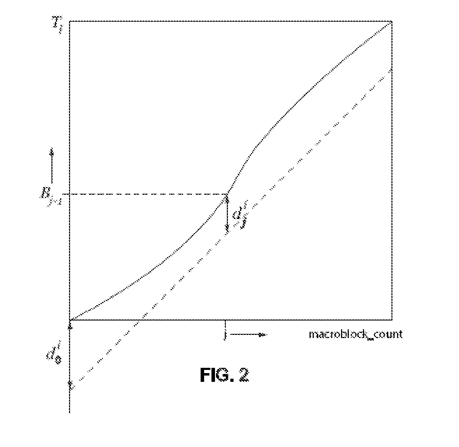

Rate control of a picture is further clarified by Figure 2. The dashed line in the figure acts as a lower bound for the virtual buffer and is defined by the latter sub-formula in formulas 14-16. The solid line denotes the value of $B_{j-1}$; total number of bits needed to code up to and including macroblock *j-1.*

Step 4: Adaptive quantization

This step modulates the reference requantization parameter according to the spatial activity in the macroblock to derive the value of the final requantization parameter *mquant* that is used to requantize the macroblock. The spatial activity measure for macroblock j is computed from the four luminance frame-organised sub-blocks (n=1..4) and the four luminance field-organised sub-blocks (n=5..8) using the intra (i.e. original) pixel values:

$$act_j = 1 + \min(vblk_1, vblk_2, vblk_3, ..., vblk_8),$$

(18)

where

$$vblk_k = \frac{1}{64} \cdot \sum_{k=1}^{64} \left( P_k^n - P\_mean_n \right)^2$$

(19)

and

$$P\_mean = \frac{1}{64} \cdot \sum_{k=1}^{64} P_k^n$$

(20)

and $P_k$ are the sample values in the n-th original 8*8 block. Then $act_j$ is normalised:

$$N\_act_j = \frac{(2 \cdot act_j) + avg\_act}{act_j + (2 \cdot avg\_act)},$$

(21)

where *avg_act* is the average value of $act_j$ of the last picture to be transcoded. Using the above computed values *mquant* can now be computed:

$$mquant_j = Q_j \cdot N\_act_j, \hspace{4cm} (22)$$

where $Q_j$ is the reference requantization parameter obtained in step 3. The final value of *mquant_j* is clipped to the range [1..31] and is used to requantize macroblock *j*.

Step 5: Updating

After a picture is transcoded, the global complexity measure corresponding to the picture type is updated as follows:

$$X_i = S_i \cdot Q_i \hspace{4cm} (23)$$

$$X_p = S_p \cdot Q_p \hspace{4cm} (24)$$

$$X_b = S_b \cdot Q_b. \hspace{4cm} (25)$$

In the above formulas, $S_i$, Sp and $S_b$ are the sizes in bits of the transcoded pictures and $Q_i$, $Q_p$ and $Q_b$ are the average requantization parameter used for requantizing the picture.

The algorithm described above is usually used in MPEG-2 encoding, but can be used in transcoding as well. Therefore, and due to its low computational complexity, it is chosen to serve as a basis for the bit rate control for the transcoder 100. However, it is not suitable for real-time transcoding for wireless streaming as such, and thus it needs to be adapted to meet all the requirements. Next it is described what kinds of modifications are needed so that the requirements concerning the bit rate control are met. This adaptation is described next.

TM-5 can only determine the target bit budget for the next GOP and the pictures contained in the GOP, when the total number of pictures N, the number of P-pictures $N_p$ and the number of B-pictures $N_b$ are known. Therefore, TM-5 requires a delay of one GOP to determine these numbers. However, a delay of one GOP is unacceptable and should therefore be removed.

In general, the GOP structure in MPEG-2 encoded video is fixed when a relatively simple encoder was used. However, most video material is encoded using a more advanced encoder which can decide to start a new GOP when a scene change occurs to increase coding efficiency. Therefore, for most video streams subject to transcoding, it must be assumed that the GOP structure is not fixed.

In real-time transcoding, such changes of the GOP structure cannot be foreseen. Therefore, the target number of bits to be assigned to a GOP that was shortened due to an upcoming scene change is too large. However, this is compensated since the bit budget is not entirely used for the GOP due to the shortening. Therefore, it is assumed that a scene change does not result in a large variation in bit rate or quality. Thus, in the transcoder 100, in which the new bit rate control algorithm can be applied, the GOP structure is learned by examining picture headers in the previous GOP and store these characteristics in variables $N$, $N_p$ and $N_b$. However, these variables are not updated when a previously transcoded GOP was shortened due to a scene change.

In step 4, the local spatial activity for each macroblock is calculated in order to apply the method of adaptive quantization. These calculations are based on spatial values but in case the transcoder 100 operates in the frequency domain, this step needs to be adapted or replaced to successfully apply TM-5 in the transcoder 100.

The solution for this is found in the paper entitled "Rate conversion of MPEG coded video by re-quantization process" by Yasuyuki Nakajima, Hironao Hori and Tamotsu Kanoh, IEEE, 1995, where the local spatial activity of a macroblock is estimated by the ratio between the original quantization parameter of the macroblock retrieved from the input stream and the average quantization parameter of the entire picture. According to the paper, step 4 of TM-5 algorithm can therefore be replaced with:

$$mquant = Q_j \cdot \left( \frac{Q_{par}}{Q_{par\_avg}} \right),\tag{26}$$

where *mquant* is the requantization parameter used to requantize the current macroblock, $Q_j$ is the base requantization parameter computed in step 3, $Q_{par}$ is the quantization parameter retrieved from the incoming bit stream which can be computed by a front-end encoder placed before the transcoder 100 and $Q_{par\_avg}$ is the average quantization parameter of the picture. Obviously, this solution can be applied in both spatial and frequency domain transcoders. Replacing step 4 with the formula above also reduces the computational complexity of TM-5 since step 4 of TM-5 requires the largest number of computations.

An important requirement of the transcoder 100 is that it should be possible to change the target bit rate at runtime with at most one frame delay, allowing for the real-time adaptation of a video to deal with both the long-term and short-term fluctuations of the available bandwidth in wireless networks. Standard TM-5 however, is developed to produce a video at a fixed pre-defined bit rate. Therefore, TM-5 needs to be adapted to allow for a bit rate change at arbitrary times.

In the first embodiment of the invention adaptation of the target bit rate at run-time is based on adapting the variables influencing the target number of bits for each picture when a target bit rate change occurs. This adaptation is achieved by changing the value of a variable as if they were calculated based on the new target bit rate. The variables present in formulas 11-13 influencing the calculation of the target number of bits when a bit rate change occurs are:

- R; target number of output data bits of the entire GOP to be transcoded.
- $X_i$, $X_p$ and $X_b$; relative complexity measure per picture type.
- *target_bit_rate* ; transcoder target bit rate specifying the bit rate of the output video.

The latter item is dealt with by obtaining a new target bit rate. The settings of the transcoder, such as a new target bit-rate, can be determined by a controller which is connected to the transcoder 100. The controller bases such decisions on input about the network conditions. Such conditions may be reported by the sending side or by the receiving side. By continuously monitoring the available network bandwidth and adjusting the bit-rate settings of the transcoder, it is possible to quickly adapt the transmitted video bit-rate to the available bandwidth and reduce the artefacts due to data loss.

How to deal with the variable *R* depends on the moment when the bit rate change occurs. When the new target bit rate arrives during transcoding the last picture of a GOP, the bit rate change affects the next GOP entirely. Therefore, variable *R* is correctly computed according to formula 10. At other times, variable *R* needs to be changed since it is computed at the beginning of the GOP and is therefore based on the old target bit rate. Therefore, when the bit rate changes at these times, variable R is changed as follows:

$$R = R \cdot \left( \frac{R_r}{prev\_R_r} \right),\tag{27}$$

where *prev_R_r* and $R_r$ denote the target reduction ratio before and after the bit rate change, respectively. $R_r$ is given by:

$$R_r = target\_bit\_rate / input\_bit\_rate\tag{28}$$

The computation of formula 27 has to be executed before the execution of step 2 in TM-5 only when a bit rate change has occurred. Thus, formula 10 is used to calculate *R* at the beginning of each GOP, but the value of R can be updated using formula 27 during each frame of the GOP at which a new bit rate setting is received. The updated target output bit rate is applied in respect of the picture of the current group of pictures to be transcoded next, if any.

The second item on the list of variables influencing the computation of the bit allocation for a picture concerns the relative complexity measures by means of variables $X_i$, $X_p$ and $X_b$. As was mentioned above, the relative complexity measures $X_i$, $X_p$ and $X_b$ are defined as the product of the generated number of bits and the average requantization parameters used to transcode a picture of the corresponding picture type. Now, when a new target bit rate change occurs, these variables are used to compute the bit allocation for the next picture. However, these variables are computed according to the old target bit rate before the target bit rate change was received. To compensate for this change, variables $X_i$, $X_p$ and $X_b$ need to be changed as if they were computed at the new target bit rate.

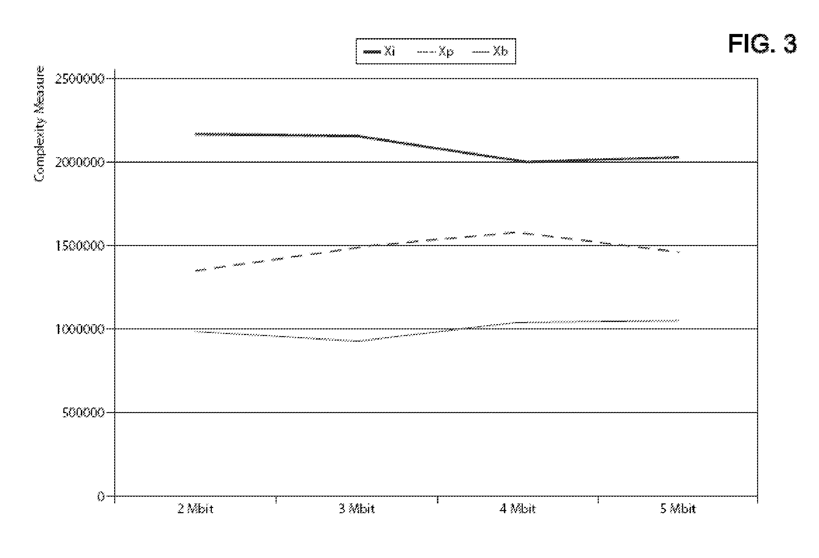

For this purpose an experiment was executed to determine how complexity measures change when computed at different bit rates. In this experiment, three movies were transcoded to four different bit rates. During transcoding, the values of variables $X_i$, $X_p$ and $X_b$ used when computing bit allocation for the pictures, were recorded. After transcoding, the values of the complexity measures were analysed. It was concluded that the complexity measures change relatively little as a result of a change in bit rate. This is illustrated in Figure 3, showing the average values of $X_i$, $X_p$ and $X_b$ at four different bit rates.

From Figure 3 it can be concluded that, on average there is a small difference between the complexity measures captured at different bit rates. This is further explained by the definition of a complexity measure: average quantization parameter to encode a picture multiplied by the size of the coded picture in bits. Increasing the average quantization parameter results in a smaller picture, and visa versa. Apparently, this is an almost linear relation where the ratio of changing the average quantization parameter corresponds to the ratio of difference in picture size. Furthermore, the complexity measures are used in formulas 11-13 only relatively to each other when determining a target number of bits for a picture. For this reason, and due to the small difference of the complexity at different bit rates, there is no need to change the complexity measures when a new target bit rate is received by the transcoder 100.

In the second embodiment of the invention each picture is scaled according to the desired reduction ratio $R_r$. Obviously, scaling each picture down by a fixed ratio $R_r$ results in a video stream at a bit rate of $R_r \cdot input\ bit\ rate$. Steps 1 and 2 can therefore be replaced with:

$$T_i = S \cdot R_r \tag{29}$$

$$T_p = S \cdot R_r \tag{30}$$

$$T_b = S \cdot R_r, \tag{31}$$

where S denotes the size in bits of the incoming picture.

The formulas show that the target bit budget assignment for each picture is only dependant on the value of $R_r$. Now, when a new target bit rate is received by the transcoder, the current value of $R_r$ changes accordingly. As such, the next picture to be transcoded receives a target bit size that corresponds to the new target bit rate. The two methods discussed above adapted TM-5 such that it allows for a target bit rate change at run-time.

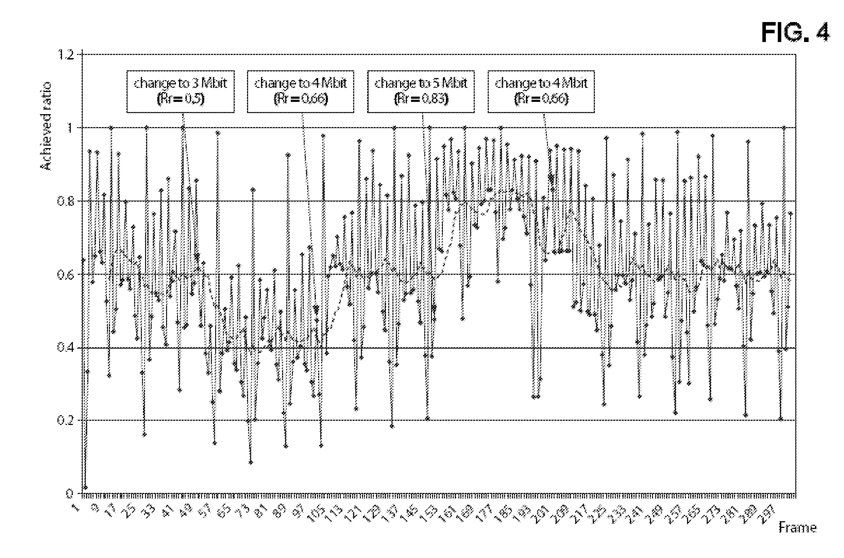

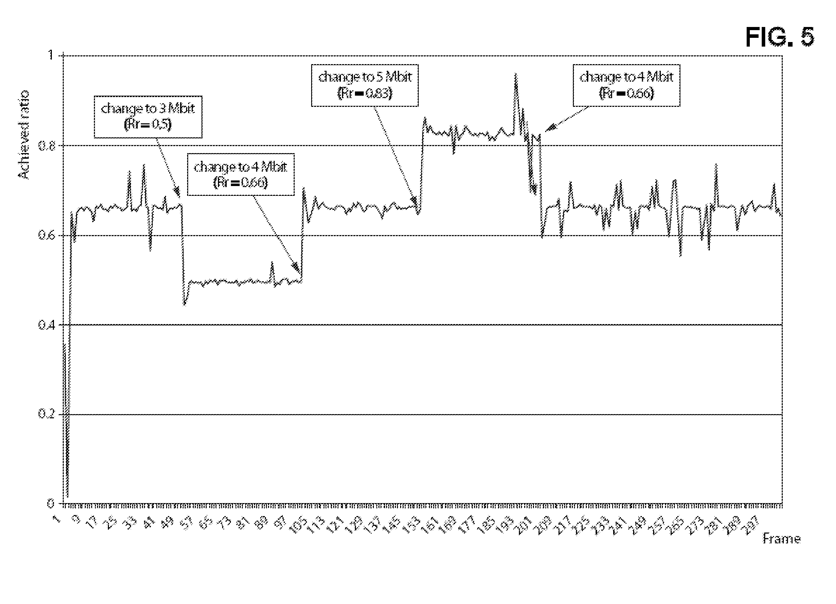

Next, the two methods of the first and second embodiments are compared with each other to assess the performance in the bit rate control algorithm for the transcoder 100. For this purpose, a video encoded at a bit rate of 6 Mbit/s is transcoded to 4 Mbit/s. However, during transcoding a new target bit rate was received four times: at frame 50 a bit rate change to 3 Mbit/s, at frame 100 a bit rate change back to 4 Mbit/s, at frame 150 a bit rate change to 5 Mbit/s and finally at frame 200 a bit rate change back to 4 Mbit/s. The results of this experiment are shown in Figures 4 and 5 for the methods of the first and second embodiments, respectively by using an open-loop transcoder. The figures show the reduction ratios achieved per frame.

The graph in Figure 5 shows that each picture is transcoded according to the current value of $R_r$. The small deviations, shown in the graph, are caused by the rate control step present in TM-5. The reduction ratios achieved by the first method, as depicted in Figure 4, show a much larger deviation of the desired reduction ratio $R_r$. These large variations are caused by TM-5, which assigns relatively more bits to I-pictures than to P- and B-pictures. Therefore, almost no reduction is achieved on I-pictures. As a result, almost all reduction is gained by reducing the size of the B-pictures. This is shown in the figure, where the pictures with a reduction ratio of more than average, as depicted by the dashed line, are mostly I- and P-pictures. The pictures below average are the B-pictures.

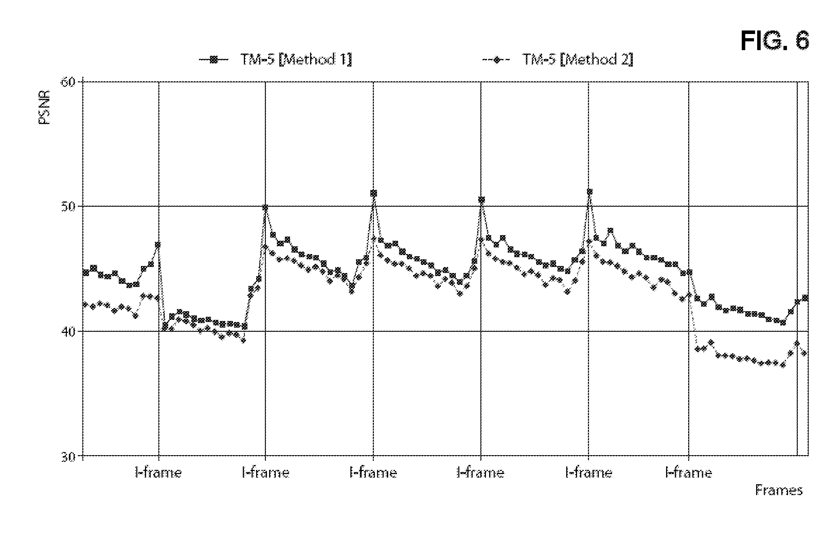

From a bandwidth point of view, the second method would perform better than the first method. However, after comparing the perceived quality of the two transcoded videos it was immediately noticed that the video transcoded using the first method provided clearly better picture quality. This was also confirmed by an objective image quality test by calculating the peak signal to noise ratio (PSNR) value for each frame. The results of this objective quality test are shown in Figure 6. The dashed and solid lines in the figure show the PSNR values of pictures from the movies transcoded by using the second and first method of adapting TM-5, respectively. The above simulation results were obtained so that the streams were transcoded by using an open-loop transcoder.

Videos transcoded by using an open-loop transcoder suffer from drift. This effect is clearly visible in the graph by the continuous quality degradation of the pictures during the GOP. However, the absence of drift correction does not justify the quality degradation of 2.6 dB, since drift correction only prevents the continuously degradation in quality. Hence, there must be another reason for this quality degradation. This is found when further analysing Figure 6. As can be seen in the figure, the difference in objective image quality between the I-frames is large. This is a direct consequence of the bit assignment of TM-5, where I-pictures are assigned a larger number of bits compared with B-pictures. Obviously, assigning relatively more bits to I-pictures results in a higher objective image quality. However, it is also shown that assigning more bits to I-pictures has a positive effect on the image quality of all the pictures in the GOP. This is explained by the fact that an I-picture is used as a reference frame by all inter frames in the GOP, either directly or indirectly. Hence, from the above it can be concluded that the target bit budget can not be computed by simply scaling the size of an input picture with ratio $R_r$, while preserving good picture quality.

If a high picture quality perceived by the viewer is considered desirable, the method of the first embodiment seems to be a more suitable choice to adapt TM-5 such that the target bit rate can be changed at run-time. The characteristic that the reduction on I-frames is only minimal, and most of the reduction is achieved by reducing the size of B-frames is expected not to endanger the total system. This is because the transcoded video stream is buffered by the network sender before it is transmitted over the wireless network. Therefore, only the bit rate averaged over a few frames is of importance, which is achieved by the first method as shown in Figure 4. This is still far less than the maximum of a GOP period delay of the original TM-5 rate control algorithm before the bit rate can be changed.

The invention equally relates to a computer program product that is able to implement any of the method steps of the embodiments of the invention when loaded and run on computer means of the transcoder.

The invention equally relates to a rate control unit 121 that is arranged to implement the method steps described above. The computer program can be arranged to be run by the rate control unit 121.

The invention equally relates to any suitable transcoder that is arranged to be run in accordance with the teachings of the embodiments described above.

While the invention has been illustrated and described in detail in the drawings and foregoing description, such illustration and description are to be considered illustrative or exemplary and not restrictive; the invention is not restricted to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that different features are recited in mutually different dependent claims does not indicate that a combination of these features cannot be advantageously used.

A computer program may be stored/distributed on a suitable medium supplied together with or as a part of other hardware, but may also be distributed in other forms, such as via the Internet or other wired or wireless telecommunication systems. Any reference signs in the claims should not be construed as limiting the scope of the invention.

**Claims**

1. A method for controlling the output bit rate of a transcoder (100) adapted for transcoding a data stream which comprises a series of groups of pictures, each picture being defined by a given number of output data bits, wherein the method comprises the step of: setting a target number R of output data bits for the current group of pictures when transcoding a first picture of said current group of pictures by using a first algorithm and updating the target number R of output data bits for the current group of pictures in response to a change of a target output bit rate of the transcoder (100) during transcoding of any picture belonging to said current group of pictures by using a second algorithm, said second algorithm being different from said first algorithm.

2. The method according to claim 1 wherein the first algorithm comprises calculating the target number R of bits for the current group of pictures by using the following formula:

$$R = \frac{(transcoder\ target\ output\ bit\ rate) \cdot N}{transcoder\ picture\ rate},$$

where N equals the number of pictures in the next group of pictures.

3.  The method according to claim 1 or claim 2 wherein the second algorithm comprises calculating the target number R of bits for the current group of pictures by using the following formula:

$$R = R \cdot \frac{R_r}{prev\_R_r} \, ,$$

where $prev\_R_r$ and $R_r$ denote the target bit rate divided by the transcoder input bit rate before and after the target output bit rate change, respectively.

4.  The method according to claim 1 wherein the updated target output bit rate is applied in respect of the picture of the current group of pictures to be transcoded next.

5.  A method for controlling the bit rate of a transcoder (100) adapted for transcoding a data stream which comprises a series of groups of pictures, each picture being defined by a given number of data bits, wherein the method comprises the step of:

    obtaining a target number T of output data bits for a picture input to the transcoder (100) by multiplying the size S in bits of the picture by a transcoder target output bit rate divided by the transcoder input bit rate.

6.  A computer program product comprising instructions for implementing the steps of a method according to any one of claims 1-5 when loaded and run on computer means of the transcoder.

7.  A control unit (121) for controlling the output bit rate of a transcoder (100) adapted for transcoding a data stream comprising a series of groups of pictures, each picture being defined by a given number of output data bits, the control unit (121) comprises means for setting a target number R of bits for the current group of pictures when transcoding a first picture of said current group of pictures by using a first algorithm and means for updating the target number R of output data bits for the current group of pictures in response to a change of a target output bit rate of the transcoder (100) during transcoding of any picture belonging to said current group of pictures by using a second algorithm, said second algorithm being different from said first algorithm.

8.  A transcoder (100) for transcoding a data stream which comprises a series of groups of pictures, each picture being defined by a given number of output data bits, the transcoder (100) comprising a control unit (121) according to claim 7.

9.  The transcoder according to claim 8, wherein the transcoder (100) is one of the following: a cascaded pixel domain transcoder, an open-loop transcoder, a closed-loop transcoder.

FIG. 1

FIG. 2

FIG. 3

FIG. 4

change to 3 Mbit
(Rr = 0,5)

change to 4 Mbit
(Rr = 0,66)

change to 5 Mbit
(Rr = 0,83)

change to 4 Mbit
(Rr = 0,66)

Achieved ratio

Frame

EP 1 944 980 A2

16

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KWANG-DEOK SEO et al.** Rate control algorithm for fast bit-rate conversion transcoding. *IEEE Transactions on Consumer Electronics,* November 2000, vol. 46 (4

- **YASUYUKI NAKAJIMA ; HIRONAO HORI ; TAMOTSU KANOH.** Rate conversion of MPEG coded video by re-quantization process. *IEEE,* 1995